(19) **Europäisches Patentamt**
**European Patent Office**
**Office européen des brevets**

(11) **EP 3 447 532 B1**

(12) **EUROPEAN PATENT SPECIFICATION**

(45) Date of publication and mention
of the grant of the patent:
**11.09.2024 Bulletin 2024/37**

(21) Application number: **18189682.0**

(22) Date of filing: **20.08.2018**

(51) International Patent Classification (IPC):
*G01S 17/02* [(2020.01)]    *G01S 17/08* [(2006.01)]
*G01S 17/93* [(2020.01)]    *G01S 7/481* [(2006.01)]
*G01S 7/486* [(2020.01)]    *G01S 7/4865* [(2020.01)]
*G01S 17/86* [(2020.01)]    *G01S 17/931* [(2020.01)]

(52) Cooperative Patent Classification (CPC):
**G01S 17/08; G01S 7/4817; G01S 7/4865;
G01S 17/86; G01S 17/931**

(54) **HYBRID SENSOR WITH CAMERA AND LIDAR, AND MOVING OBJECT**

HYBRIDSENSOR MIT KAMERA UND LIDAR SOWIE BEWEGTOBJEKT

CAPTEUR HYBRIDE AVEC CAMÉRA ET LIDAR ET OBJET MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2017 KR 20170105671
02.11.2017 KR 20170145577
23.10.2017 KR 20170137745
16.05.2018 KR 20180055953
11.07.2018 KR 20180080377**

(43) Date of publication of application:
**27.02.2019 Bulletin 2019/09**

(73) Proprietor: **Yujin Robot Co., Ltd.
Incheon
22013 (KR)**

(72) Inventors:
• **SHIN, Kyung Chul
03010 Seoul (KR)**
• **PARK, Seong Ju
15820 Gyeonggi-do (KR)**
• **LEE, Jae Young
Gyeonggi-do, 15804 (KR)**

• **CHEON, Moo Woong
13903 Gyeonggi-do (KR)**
• **KIM, Man Yeol
21931 Incheon (KR)**

(74) Representative: **Pace Napoleone, Maria et al
De Simone & Partners S.r.l.
Via Vincenzo Bellini, 20
00198 Roma (IT)**

(56) References cited:
**EP-A1- 2 890 125    WO-A1-2017/122529
WO-A1-2018/130885    US-A1- 2011 285 910
US-A1- 2014 300 732    US-A1- 2016 073 080
US-A1- 2016 104 289**

• **FENG LI ET AL: "A hybrid camera for motion
deblurring and depth map super-resolution",
IEEE COMPUTER SOCIETY CONFERENCE ON
COMPUTER VISION AND PATTERN
RECOGNITION. PROCEEDINGS, 1 June 2008
(2008-06-01), US, pages 1 - 8, XP055534483, ISSN:
1063-6919, DOI: 10.1109/CVPR.2008.4587574**

## Description

## TECHNICAL FIELD

The technical field of the present disclosure relates to a sensor module which combines and processes information obtained by a camera and information obtained by a Lidar.

## BACKGROUND ART

The contents described in this section merely provide background information on the present exemplary embodiment but do not constitute the related art.

Recently, in accordance with the development of a robot technology, a mobile robot which determines a route and moves by itself. In order to efficiently determine a position in a space and move a space, the mobile robot needs to recognize the position on the space while generating a map for a space where the robot is moving. The mobile robot travels by dead reckoning using a gyroscope and an encoder provided in a driving motor and analyzes distance information using a Lidar sensor provided at an upper portion or analyzes an image using a camera to generate a map.

The mobile robot corrects errors accumulated by driving information from the gyroscope and the encoder using point cloud information on surrounding environments obtained by a Lidar sensor. A time of flight based Lidar measures a time of a light signal which is emitted and then reflected and measures a distance from a reflector using a speed of light. The mobile robot may obtain image information on the surrounding environment obtained from the camera.

However, since a type of data obtained from the Lidar sensor and a type of data obtained from the camera are different, it is difficult to converge the data.

When a moving object such as a robot or a vehicle moves under an unknown environment, there is no information on a surrounding environment. Therefore, a map for an environment needs to be generated using sensor information and a current position of the moving object needs to be predicted from the generated map. A method of recognizing the position and generating a surrounding environment map as described above is referred to as a simultaneous localization and mapping (SLAM) technique. There are various SLAM techniques such as a filter based SLAM or a graph based SLAM.

The graph based SLMA represents the position and the motion of the robot by a node and an edge of a graph. A node is a position of a robot or an artificial landmark at a specific timing. The edge is a relationship between two nodes and refers to a constraint on a space between two nodes. The measured edge includes errors. Therefore, when a traveling distance of the robot is increased and the number of nodes is increased, errors may be accumulated during a process of predicting the position.

US 2016/073080 A1 describes a system, an apparatus, and a method for depth camera image re-mapping. A depth camera image from a depth camera is received and a depth camera's physical position is determined The depth camera's physical position is determined relative to an other physical position, such as the physical position of a color camera. The depth camera image is transformed according to a processing order associated with the other physical position.

("A hybrid camera for motion deblurring and depth map super-resolution" of Feng Li et al.) describes a hybrid camera consisting of a pair of low-resolution high-speed (LRHS) cameras and a single high-resolution low-speed (HRLS) camera. The LRHS cameras are able to capture fast-motion with little motion blur. They also form a stereo pair and provide a low-resolution depth map.

EP 2 890 125 A1 describes a time-of-flight (TOF) camera system comprising several cameras, at least one of the cameras being a TOF camera, wherein the cameras are assembled on a common support and are imaging the same scene and wherein at least two cameras are driven by different driving parameters.

US 2011/285910 A1 describes RGB-Z imaging systems acquiring RGB data with a high X-Y resolution RGB pixel array, and acquiring Z-depth data with an array of physically larger Z pixels having additive signal properties. In each acquired frame, RGB pixels are mapped to a corresponding Z pixel.

US 2016/104289 A1 describes a method for range map generation. The method includes receiving an image from a camera and receiving a 3D point cloud from a range detection unit, transforming the 3D point cloud from range detection unit coordinates to camera coordinates, projecting the transformed 3D point cloud into a 2D camera image space corresponding to the camera resolution to yield projected 2D points, filtering the projected 2D points based on a range threshold, and generating a range map based on the filtered 2D points and the image.

US 2014/300732 A1 describes a motion determination system receiving a first and a second camera image from a camera, the first camera image received earlier than the second camera image. The system identifies corresponding features in the first and second camera images. The system receives range data comprising a first and a second range data from a range detection unit, corresponding to the first and second camera images, respectively, and determines first positions and the second positions of the corresponding features using the first camera image and the second camera image. The first positions or the second positions are determined by also using the range data. The system determines a change in position of the machine based on differences between the first and second positions, and a VO-based velocity of the machine based on the determined change in position.

WO 2017/122529 A1 describes a method for fusing measurements of sensors having different resolutions performing jointly a calibration of the sensors and a fusion of the their measurements to produce calibration parameters defining a geometrical mapping between coordinate systems of the sensors and a fused set of measurements that includes the modality of a sensor with resolution greater than its resolution. The calibration and the fusion are performed jointly to update the calibration parameters and the fused set of measurements in dependence on each other.

US 2018/130885 A1 describes a system for registering a three dimensional map of an environment including a data collection device, such as a robotic device, one or more sensors installable on the device, such as a camera, a LiDAR sensor, an inertial measurement unit (IMU), and a global positioning system receiver. The system is configured to use the sensor data to perform visual odometry, and/or LiDAR odometry.

## SUMMARY OF THE INVENTION

A major object of the present disclosure is to generate composite data by mapping distance information on an obstacle obtained through a Lidar sensor to image information on an obstacle obtained through an image sensor and interpolate the distance information of the composite data based on an intensity of a pixel to converge the Lidar sensor and the image sensor.

Another object of the present invention is to provide a map which covers a broader area within a predetermined time under a predetermined condition, by generating a key frame for a node using scan information, calculating an odometry edge between consecutive nodes, and updating the key frame to predict a local map, and by detecting a loop closure edge between inconsecutive nodes for a set of updated key frames and correcting a position of the node based on the odometry edge and the loop closure edge to predict a global map.

According to an aspect of the present invention, a hybrid sensor includes: a first sensor which obtains first data for a target, a second sensor which obtains second data for a target, and a processing unit which generates composite data obtained by mapping the first data and the second data.

According to another aspect of the present disclosure, a moving object includes: a hybrid sensor which obtains first data related to a target by means of a first sensor, obtains second data related to the target by means of a second sensor, and generates composite data obtained by mapping the first data and the second data, a map generator which analyzes the first data or the composite data to generate a map related to a surrounding environment, and a moving device implemented to move the moving object based on the map.

The first data includes first coordinate information which is two-dimensionally represented and intensity information related to the first coordinate information, the second data includes second coordinate information which is two-dimensionally represented and depth information related to the second coordinate information, and the composite data includes space coordinate information which is three-dimensionally represented and the intensity information.

The processing unit compares the first coordinate information and the second coordinate information with respect to a space region where a first space area seen from a position where the first sensor is installed and a second space area seen from a position where the second sensor is installed overlap to map corresponding coordinate information.

The processing unit generates the composite data based on (i) depth information corresponding to common coordinate information corresponding to the second coordinate information, among the first coordinate information and (ii) intensity information corresponding to the common coordinate information.

The processing unit predicts first predicted depth information related to non-common information which does not correspond to second coordinate information, among first coordinate information, using (i) depth information corresponding to common coordinate information and (ii) intensity information corresponding to the common coordinate information.

The processing unit determines similarity between (i) intensity information of the non-common coordinate information and (ii) intensity information of common coordinate information present within a predetermined range to predict the first predicted depth information.

The predicting unit predicts second predicted depth information related to the non-common coordinate information using (i) intensity information of the non-common coordinate information, (ii) intensity information of the common coordinate information, and (iii) the first predicted depth information.

The processing unit updates the composite data based on the first and second predicted depth information related to the non-common coordinate information.

The hybrid sensor may operate both the first sensor and the second sensor for a target which is closer than a predetermined distance to generate composite data and selectively operate the first sensor or the second sensor for a target which is disposed farther than a predetermined distance to obtain data.

The map generator may analyze the first data, the second data, or the composite data to generate a key frame related to a node, calculate an odometry edge between consecutive nodes, and update the key frame to predict a local map and detect a loop closure edge between inconsecutive nodes with respect to a set of the updated key frame and correct the position of the node based on the odometry edge and the loop closure edge to generate a global map.

The map generator may rotate or move the first data, the second data, or the composite data to perform scan matching or measures the odometry information of the moving object to calculate the odometry edge and correct an error between the odometry edge predicted based on a predicted value of the node and the measured odometry edge through the scan matching.

The map generator may filter the key frame when a predetermined condition for a movement distance of the moving object is satisfied.

The map generator may predict the global map for a set of the updated key frame when a predetermined condition for the movement distance of the mobile robot or a change of the surrounding environment is satisfied.

The map generator may correct an error of the key frame using uncertainty propagation with respect to the specified key frame.

The map generator may extract a first candidate for a key frame located within a predetermined distance using a Mahalanobis distance.

The map generator may compare a key frame of the first candidate group with a key frame obtained during a predetermined time period to extract a second candidate group related to a key frame matching in a predetermined probable range.

The map generator may extract a third candidate group related to a key frame matching a predetermined consistence range from the second candidate group using a consistence checking algorithm.

The map generator may correct an error of the odometry edge and an error of the loop closure edge by a graph optimizing technique.

According to the exemplary embodiments of the present disclosure, composite data is generated by mapping distance information on an obstacle obtained by means of a Lidar sensor to image information on an obstacle obtained by means of an image sensor and the distance information of the composite data is interpolated based on an intensity of a pixel to converge data of the Lidar sensor and data of the image sensor.

## BRIEF DESCRIPTION OF THE DRAWINGS

FIG. 1 is a block diagram of a moving object according to an exemplary embodiment of the present disclosure;

FIG. 2 is a block diagram illustrating a hybrid sensor according to another exemplary embodiments of the present disclosure;

FIG. 3 is a view illustrating a viewing angle of a Lidar sensor;

FIG. 4 is a view illustrating an overlapping area of a viewing angle of a camera and a viewing angle of a Lidar sensor;

FIG. 5 is a view illustrating the invention by composite data processed by a hybrid sensor;

FIGS. 6A to 6D are views illustrating image information, depth information, and predicted depth information generated by a hybrid sensor according to another exemplary embodiment of the present disclosure;

FIG. 7 is a view illustrating a hybrid sensor having a plurality of cameras according to another exemplary embodiment of the present disclosure;

FIG. 8 is a graph model representing information processed by simultaneous localization and mapping (SLAM) method;

FIG. 9 is a view illustrating a map generator of a moving object according to another exemplary embodiment of the present disclosure;

FIG. 10 is a view illustrating data scanned by a map generator of a moving object according to another exemplary embodiment of the present disclosure;

FIG. 11 is a view illustrating data filtered by a map generator of a moving object according to another exemplary embodiment of the present disclosure;

FIG. 12 is a flowchart illustrating a global map predicting operation of a map generator of a moving object according to another exemplary embodiment of the present disclosure;

FIGS. 13 to 17 are views illustrating data processed by a process of predicting a global map by a map generating unit of a moving object according to another exemplary embodiment of the present disclosure; and

FIG. 18 is a flowchart illustrating a map generating method of a moving object according to another exemplary embodiment of the present disclosure.

## DETAILED DESCRIPTION OF THE EMBODIMENT

Hereinafter, in the description of the present disclosure, a detailed description of the related known functions will be omitted if it is determined that the gist of the present disclosure may be unnecessarily blurred as it is obvious to those skilled in the art and some exemplary embodiments of the present disclosure will be described in detail with reference to exemplary drawings.

A hybrid sensor according to an exemplary embodiment in which a Lidar and a camera are converted may be applied to a product which requires distance measurement such as a flight object such as a drone, a moving object such as a vehicle, or small home appliance.

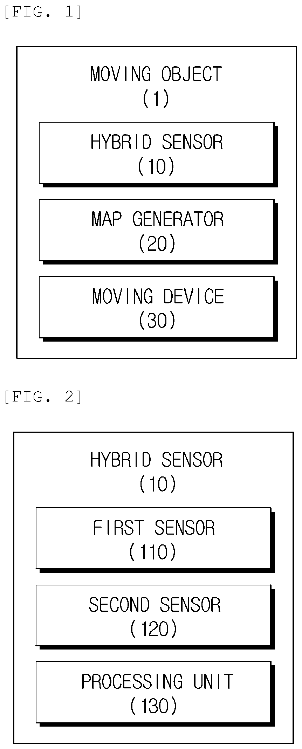

FIG. 1 is a block diagram illustrating a moving object. As illustrated in FIG. 1, a moving object 1 includes a hybrid sensor 10, a mag generator 20, and a moving device 20. The moving object 1 may omit some components among various components which are exemplarily illustrated in FIG. 1 or may further include other component. For example, the moving object may further include a cleaning unit.

The moving object 1 refers to a device designed to be movable from a specific position to another position according to a predetermined method and moves from the specific position to another position using a moving unit such as wheels, rails, or walking legs. The moving object 1 may collect external information using a sensor and then move according to the collected information or move using a separate manipulating unit by a user.

Examples of the moving object 1 include robot cleaners, toy cars, mobile robots for industrial or military purposes. The moving object 1 may travel using wheels or walk using one or more legs, or may be implemented by a combination thereof.

The robot cleaner is a device which sucks foreign matters such as dust accumulated on a floor while traveling a cleaning space to automatically clean the cleaning space. Differently from a normal cleaner which moves by an external force provided by a user, the robot cleaner moves using external information or a predetermined moving pattern to clean the cleaning space.

The robot cleaner may automatically move using a predetermined pattern or detect an external obstacles using a detecting sensor and then moves as it is detected. Further, the robot cleaner may move in accordance with a signal transmitted from a remote control device which is manipulated by the user.

The moving device 30 calculates a traveling route based on a distance to the target or detects an obstacle to move the moving object. Odometry information such as a revolution, a gradient, or a rotational amount may be obtained from an encoder connected to the moving device or an inertial measurement unit. The IMU may be implemented by an acceleration sensor or a gyro sensor.

A position of the moving object 1 may be represented by a three-dimensional vector. The three-dimensional vector may be represented by an X coordinate and a Y coordinate from an origin of a reference coordinate system and an angle formed by an X axis of a robot coordinate system and an X axis of the reference coordinate system.

FIG. 2 is a block diagram illustrating a hybrid sensor. As illustrated in FIG. 2, the hybrid sensor 10 includes a first sensor 110, a second sensor 120, and a processing unit 130. The hybrid sensor 10 may omit some components among various components which are exemplarily illustrated in FIG. 2 or may additionally include other component.

The first sensor 110 obtains first data for a target. The first sensor 110 may be an image sensor which obtains image information on an obstacle. The first data includes first coordinate information which is two-dimensionally represented and intensity information related to the first coordinate information. The intensity information has a predetermined range according to a bit value set for a pixel.

The camera includes an image sensor which converts light entering through a lens into an electrical image signal. The image sensor may be implemented by a charged coupled device (CCD) or a complementary metal-oxide semiconductor (CMOS).

The second sensor 120 obtains second data for a target. The second sensor 120 may be a Lidar sensor which obtains distance information on an obstacle. The second data includes second coordinate information which is two-dimensionally represented and depth information related to the second coordinate information.

The Lidar sensor is a device which transmits a laser signal, measures a returning time of the reflected signal, and measures a distance to a reflector using a speed of light. The laser signal is converted into an electrical signal by a photo diode. The laser signal may have a predetermined wavelength band. For example, the Lidar may use a wavelength of an infrared ray region.

The Lidar sensor may operate by a time of flight (TOF) manner. According to the time of flight manner, a laser emits a pulsed or square wave signal to measure a time when reflection pulses or square wave signals from objects within a measurement range reach a receiver to measure a distance between an object to be measured and a sensor.

The Lidar sensor includes an optical transceiver and a distance measuring unit.

The optical transceiver transmits a laser signal and receives a reflected signal. The optical transceiver emits light to a target by a start control signal and receives light which is reflected from the target to convert the light into an electrical signal. The optical transceiver outputs the electrical signal during a predetermined detecting time.

The optical transceiver may include a signal converter. The signal converter is connected to a photo diode of the optical transceiver and a trans impedance amplifier is connected to the signal converter.

The light source emits light to the target based on a predetermined sampling period. The sampling period may be set by a controller of a distance measuring apparatus. The sampling period is a time when the optical transceiver emits light and receives reflected light, and converts the light into an electrical signal in accordance with the start control signal. The optical transceiver may repeatedly perform this operation in a next sampling period. The photo diode receives light reflected from the target to convert the light into an electrical signal.

The distance measuring unit includes one or more signal discriminators which convert an electrical signal to measure an exact timing and output a stop control signal.

The distance measuring unit uses a signal discriminator to convert the electrical signal such that a signal point having a maximum signal magnitude has a predetermined magnitude, adjust a magnitude of the converted electrical signal, and detect a timing having the predetermined magnitude. The signal discriminator converts the electrical signal to generate a stop control signal.

The signal discriminator receives the electrical signal from the photo diode or the trans impedance amplifier. The received electrical signal, that is, an input signal rises or falls by the reflected light. The signal discriminator exactly measures a target timing for the input signal to output the electrical signal.

The distance measuring unit may include one or more time to digital converters which convert the difference of two hours into the digital value. The input signal of the time to digital converter may be a pulse shape of the same signal source or may be an edge of other signal source. For example, the distance measuring apparatus may calculate the time difference based on a rising edge or a falling edge of the start control signal and a rising edge or a falling edge of the stop control signal.

The distance measuring unit calculates the pulse width with respect to the rising edge or the falling edge of the stop control signal and adds the factor value which is applied to a function of the pulse width versus walk error to a time of flight which has not been corrected. The distance measuring apparatus corrects the time of flight using a pulse width of the reflected signal to calculate the exact time of flight.

The processing unit 130 receives first data from the first sensor 110 and receives second data from the second sensor 120. The processing unit 130 generates composite data obtained by mapping the first data and the second data. The composite data includes space coordinate information which is three-dimensionally represented and intensity information.

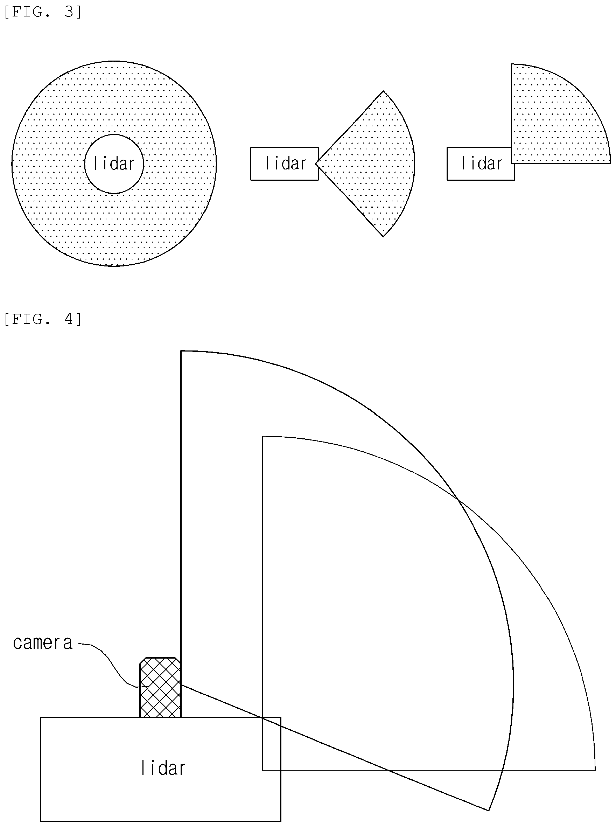

FIG. 3 is a view illustrating a viewing angle of a Lidar sensor.

The Lidar sensor may scan a specifically plane or a specific dimension at an omnidirectional viewing angle. The Lidar sensor may scan with a viewing angle within a specific direction and a specific angle range. The Lidar sensor illustrated on a left side of FIG. 1 scans in all directions and the Lidar sensor illustrated at a center and a right side of FIG. 1 sweeps in a vertical direction. A specific product may sweep between +/- 45 degrees or 0 to 90 degrees.

FIG. 4 is a view illustrating an overlapping area of a viewing angle of a camera and a viewing angle of a Lidar sensor.

In order to fuse the Lidar sensor and the camera, the Lidar sensor and the camera may be installed such that a viewing angle of the camera and a viewing angle of the Lidar sensor overlap as much as possible. As illustrated in FIG. 4, the camera may be disposed above the Lidar. Since a wide angle camera has a larger viewing angle (for example, 190 degrees) than that of a normal camera, the overlapping area with the viewing angle of the Lidar sensor may be increased.

However, since a type of data obtained from the Lidar sensor and a type of data obtained from the camera are different, the data needs to map to each other.

The hybrid sensor 10 maps the distance information on an obstacle obtained through the Lidar sensor to image information on an obstacle obtained through an image sensor to create composite data. The image information includes an intensity of a pixel.

The processing unit 130 compares first coordinate information obtained from the first sensor 110 and second coordinate information obtained from the second sensor, with respect to a first space area seen from a position where the first sensor 110 is installed and a space area overlapping the second space area seen from a position where the second sensor 120, to map corresponding coordinate information.

When the distance information of the Lidar is converted into image information of the camera, information on the obstacle obtained through the Lidar may be mapped to the image area as represented in Equation 1.

## Equation 1

$$m = K[R|t]X$$

Here, m is a pixel-mapped coordinate (common coordinate information), X is information on an obstacle obtained through the Lidar, R and t are transformation attributes, and K is an image matrix (first coordinate information) obtained through a camera attached to the Lidar. The transformation attributes may be a transformation matrix for size transform, position transform, shape transform, and rotation. The transformation attributes may be a rotation matrix and a translation matrix.

The processing unit 130 creates the composite data based on (i) depth information corresponding to common coordinate information corresponding to the second coordinate information, in the first coordinate information and (ii) intensity information corresponding to the common coordinate information.

The composite data Xf has a format represented by Equation 2.

## Equation 2

$$Xf = [x, y, z, I]$$

Here, x, y, and z represent three-dimensional space coordinate on an obstacle in a frame of the Lidar and I represents an intensity. The three-dimensional space coordinate includes a two-dimensional coordinate and a distance information.

In the Lidar, even though a density of the obstacle is maximized, the depth information in some image areas may not be sufficient. The hybrid sensor interpolates or expands the distance information of the composite data based on the intensity of the pixel. The hybrid sensor 10 may densify the distance information of the composite data using an interpolation technique.

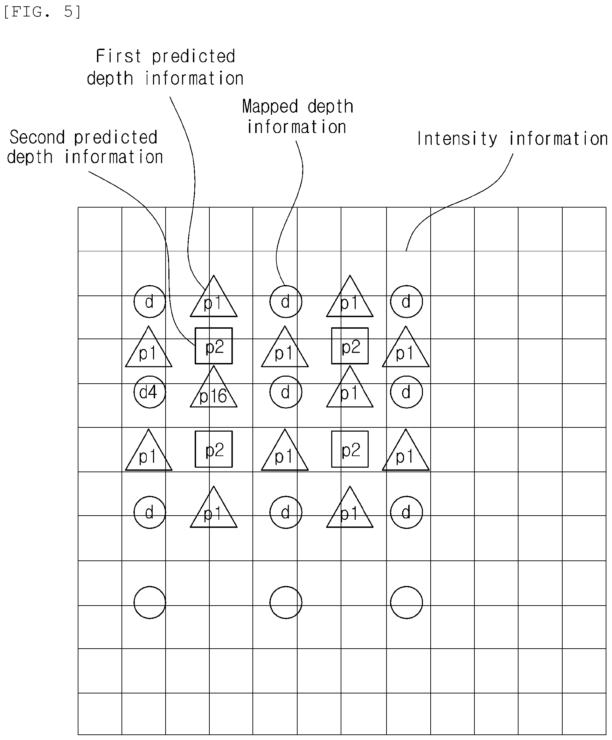

FIG. 5 is a view illustrating composite data processed by a hybrid sensor. The hybrid sensor generates predicted depth information according to the invention.

Based on an assumption that adjacent obstacles have similar depth information, adjacent pixels have similar intensity information, and pixels having similar intensity information have similar depth information, the distance information mapped to an image area is interpolated.

The processing unit 130 predicts first predicted depth information p1 related to non-common information which does not correspond to second coordinate information, among first coordinate information, using (i) depth information d corresponding to common coordinate information and (ii) intensity information corresponding to the common coordinate information.

The processing unit 130 determines similarity between adjacent intensity information by comparing (i) intensity information of the non-common coordinate information and (ii) intensity information of common coordinate information present within a predetermined range from the non-common coordinate information. The processing unit 130 predicts first predicted depth information p1 in accordance with a similarity determining result. The processing unit 130 updates the composite data based on the first predicted depth information related to the non-common coordinate information.

The processing unit 130 predicts second predicted depth information p2 related to non-common coordinate information using (i) intensity information of non-common coordinate information present in the predetermined range (ii) intensity information of common coordinate information present in the predetermined range, and (iii) the first predicted depth information p1 present within the predetermined range. The processing unit 130 updates the composite data based on the second predicted depth information related to the non-common coordinate information.

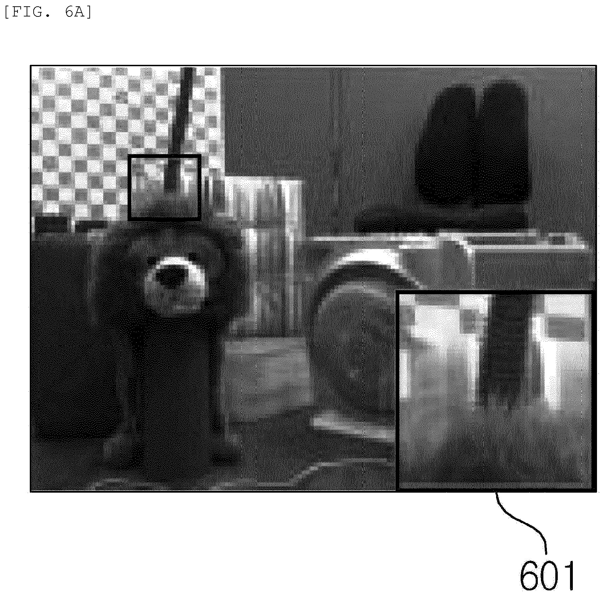

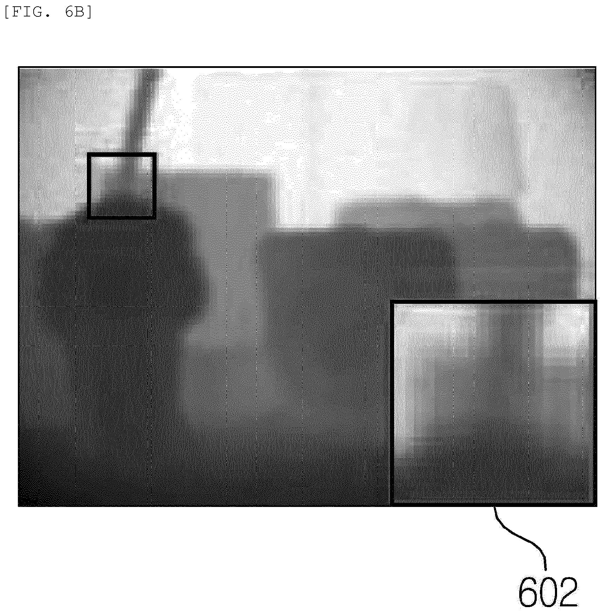

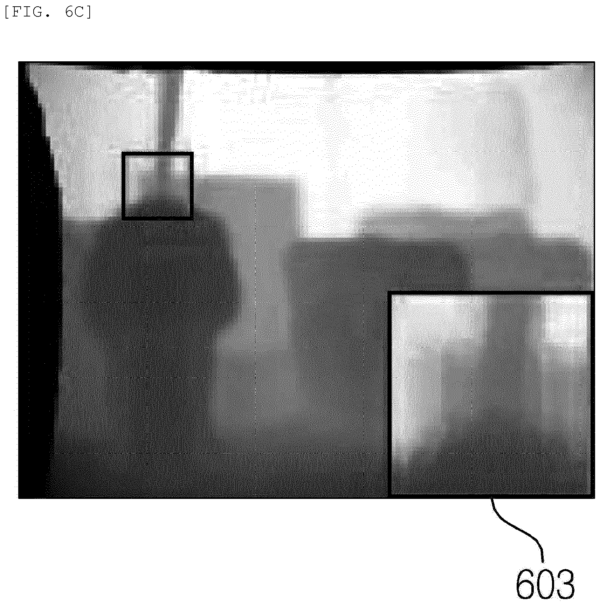

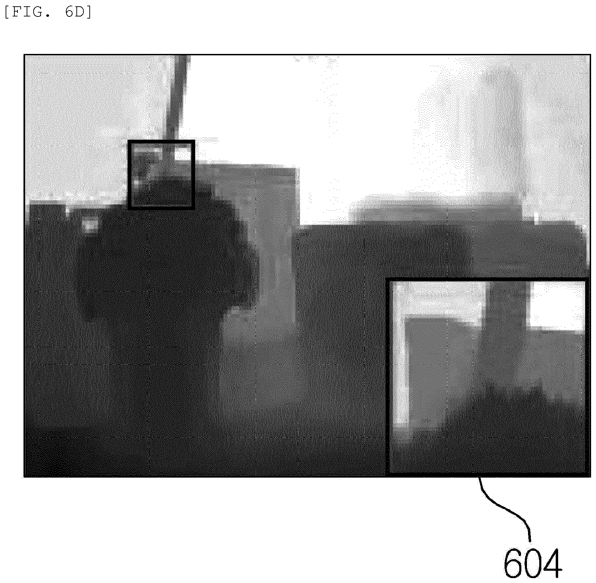

FIGS. 6A to 6D are views illustrating data obtained by a Lidar sensor of a hybrid sensor and data obtained by an image sensor. The hybrid sensor needs to interpolate distance information which is not mapped after combining an image 610 in which intensity information of a pixel is represented and distance information. The hybrid sensor interpolates the distance information which is not mapped, based on the intensity information. Referring to images 602 and 603 in which distance information which is not mapped is interpolated only using mapped distance information in FIGS. 6B and 6C and an image 604 in which the distance information which is not mapped is interpolated based on the intensity information in FIG. 6D, it is understood that the precision of the distance information included in the composite data is improved by the distance information interpolated using the intensity information.

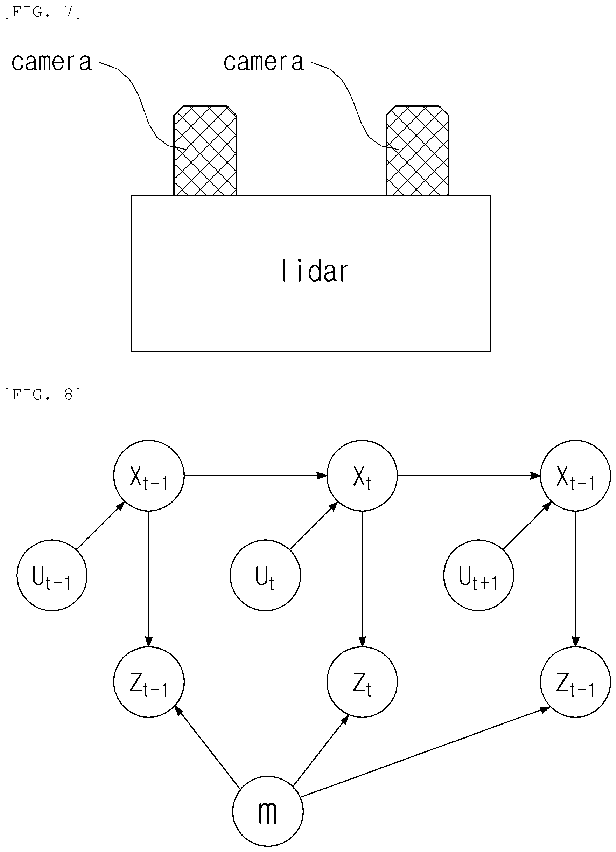

FIG. 7 is a view illustrating a hybrid sensor including a plurality of cameras.

When the moving object measures a long distance, the distance measurement may be restricted in accordance with a power of the laser and the environment. The hybrid sensor operates both the first sensor and the second sensor for a target which is closer than a predetermined distance to create composite data.

In order to overcome the distance restriction of the Lidar, the moving object may perform the measurement only using the camera. The hybrid sensor selectively operates the first sensor or the second sensor for a target which is disposed farther than a predetermined distance to create composite data.

The hybrid sensor may directly measure a distance using two wide angle cameras. The hybrid sensor may apply a single lens camera. In an environment where noises may be easily included in odometry information, it is desirable to apply a stereo camera rather than the single lens camera. FIGS. 8 to 18 are views for explaining an operation of recognizing a position and generating a map of a moving object according to exemplary embodiments of the present disclosure.

When a moving object such as a robot or a vehicle moves under an unknown environment, there is no information on a surrounding environment. Therefore, a map for an environment needs to be generated using sensor information and a current position of the moving object needs to be predicted from the generated map. A method of recognizing the position and creating a surrounding environment map as described above is referred to as a simultaneous localization and mapping (SLAM) technique.

FIG. 8 is a graph model representing information processed by simultaneous localization and mapping (SLAM) method. Referring to FIG. 8, x denotes a position of a robot, u denotes odometry information, z denotes an observed value, and m denotes a predicted map. There are various SLAM techniques such as a filter based SLAM or a graph based SLAM.

The graph based SLMA represents the position and the motion of the robot by a node and an edge of a graph. A node is a position of a robot or an artificial landmark at a specific timing. The edge is a relationship between two nodes and refers to a constraint on a space between two nodes. The measured edge includes errors. Therefore, when a traveling distance of the robot is increased and the number of nodes is increased, errors may be accumulated during a process of predicting the position.

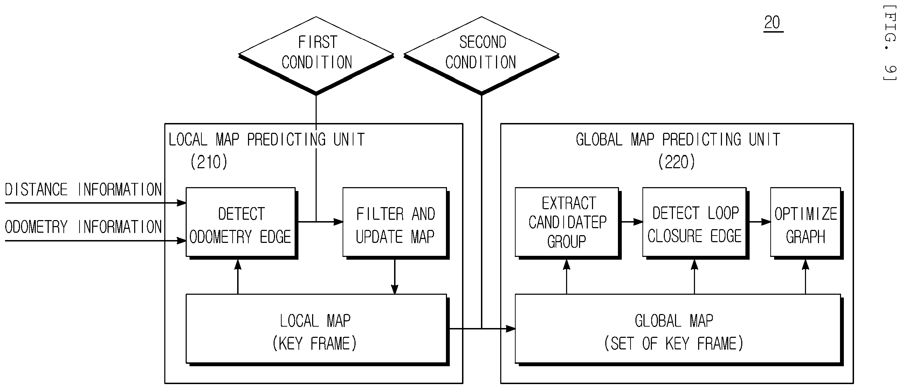

FIG. 9 is a view illustrating a map generator. As illustrated in FIG. 9, the map generator 20 includes a local map predicting unit 210 and a global map predicting unit 220. The local map predicting unit 210 and the global map predicting unit 220 may be implemented by the same or different processors.

The map generator 20 represents a pose which is scanned by a node and calculates a relative pose between the nodes. The map generator 20 optimizes a position of the nodes depending on the relative pose between nodes to update the map. The map generator 20 finds a node value which satisfies constrains as much as possible or a node value which is minimally deviated from the constrains and optimizes a position of the node by performing a process of correcting errors in the positions of the nodes. That is, the nodes are converged to an optimal node value based on the constrain.

The map generator 20 predicts a current position using sensor data obtained from a close region when the current position is predicted. A scanning period and a key frame generating period are set to be appropriate values depending on a design to be implemented and may be set to be different from each other as needed.

The hybrid sensor 10 obtains scan information of a space where the mobile robot is located. The hybrid sensor 10 may obtain omnidirectional distance information or distance information of a partial region using a Lidar sensor. The map generator 20 may additionally obtain odometry information of a mobile robot together with the distance information. The map generator may obtain odometry information such as a revolution, a gradient, or a rotational amount may be obtained from an encoder connected to the moving device or an inertial measurement unit. The IMU may be implemented by an acceleration sensor or a gyro sensor.

A position of the mobile robot may be represented by a three-dimensional vector. The three-dimensional vector may be represented by an X coordinate and a Y coordinate from an origin of a reference coordinate system and an angle formed by an X axis of a robot coordinate system and an X axis of the reference coordinate system.

The local map predicting unit 210 generates a key frame regarding a node using scan information and calculates an odometry edge between consecutive nodes. The observed value between nodes has uncertainty. The uncertainty of the odometry edge may be represented by a covariance matrix.

The local map predicting unit 210 stores a key frame among a plurality of scan information obtained at every scanning period. The scan information may be represented by a point cloud or composite data. The key frame includes distance information and time information. When there is no registered key frame, the local map predicting unit 210 generates a key frame using distance information which is currently input and then predicts the local map by updating the key frame. The local map predicting unit 210 may perform scan matching based on the local map in which a plurality of scan information is added to improve precision.

The local map predicting unit 210 rotates or moves the scan information to match the scan or measure the odometry information of the mobile robot to calculate the odometry edge. The local map predicting unit 210 corrects an error between the odometry edge predicted based on the predicted value of the node and the measured odometry edge through the scan matching.

The global map predicting unit 220 detects a loop closure edge between inconsecutive nodes with respect to a set of the updated key frames. When the mobile robot visits a region where the mobile robot has visited, again, the errors of the nodes may be more precisely corrected. Differently from the odometry edge between nodes which are temporally consecutive, the loop closure edge forms a spatial relationship between nodes which are not temporally consecutive. However, since it is inefficient to generate a loop closure edge between all edges, it is necessary to detect the appropriate loop closure edge in consideration of constraints.

The global map predicting unit 220 predicts a global map by correcting the position of the node based on the odometry edge and the loop closure edge. The global map predicting unit 220 combines local maps to extend and update the global map.

An interface is a communication path through which transmits and receives information to and from other device. The other device accesses the map generating unit 20 through an interface to set a parameter. The map generator 20 may transmit the measured position and the map to the other device through the interface.

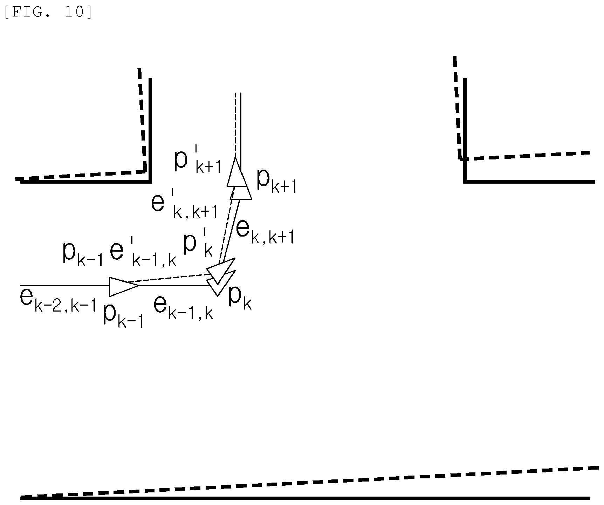

Hereinafter, an operation of the map generator of matching the scan will be described with reference to FIG. 10. FIG 10 is a view illustrating data which is scan-matched by the map generator.

p denotes a pose of a node in accordance with time and position changes and e denotes a spatial relationship between nodes. The scan information obtained by the map generator includes distance information from a fixed structure.

When scan information before the movement of the robot and after the movement of the robot is compared, the odometry errors are accumulated so that common portions do not overlap. The odometry errors are corrected by the scan matching which rotates and moves the scan information and calculates probability of the observed value so that a precise position of the robot may be predicted.

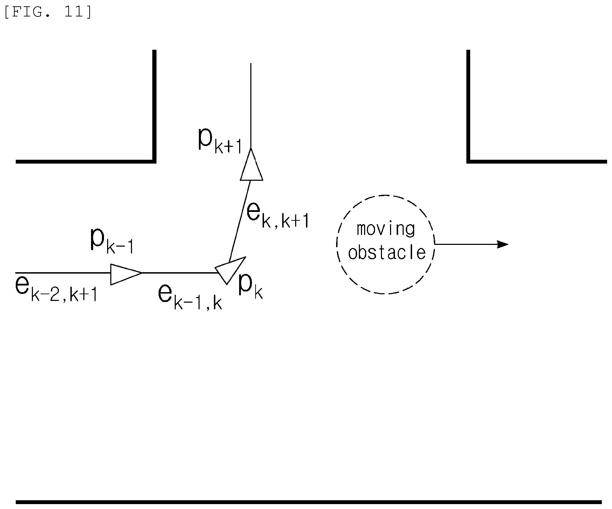

Hereinafter, a filtering operation of the map generator will be described with reference to FIG. 11. FIG 11 is a view illustrating data which is filtered by the map generator.

The scan information obtained at a specific time or in a specific position may include a noise such as a moving obstacle, which is different from the fixed structure. Further, the local map which is progressively updated while the mobile robot moves may be changed to a structure which is different from an actual structure. That is, due to the moving obstacle, when the scan information obtained at different time period in the same position is scan-matched, an error may be generated in the predicted map.

The local map predicting unit discriminates a moving obstacle and a fixed obstacle from a plurality of scan information obtained during a predetermined time period by a probable technique and compares newly obtained scan information to remove the moving obstacle from the key frame, thereby updating the local map. The local map is updated by removing the noise using the recent N scan information. The noise may be point cloud data or composite data which is modified by moving a predetermined movement distance or rotating at a predetermined rotation angle.

In order to reduce a calculating load and obtain significant information, when a first condition for a movement distance of the mobile robot is satisfied, the local map predicting unit may filter the key frame. The first condition is set based on the movement distance. For example, when the moving object moves by a predetermined distance or more from the reference point, the local map predicting unit performs the filtering to remove the noise for the moving obstacle.

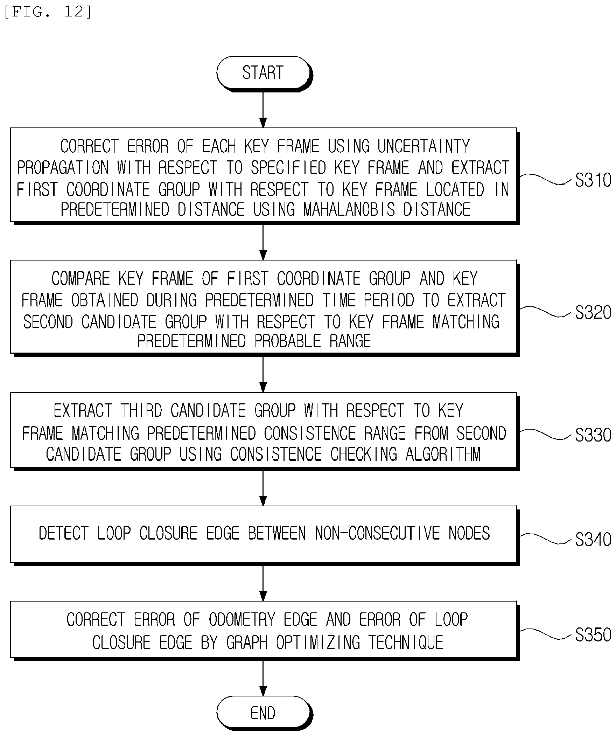

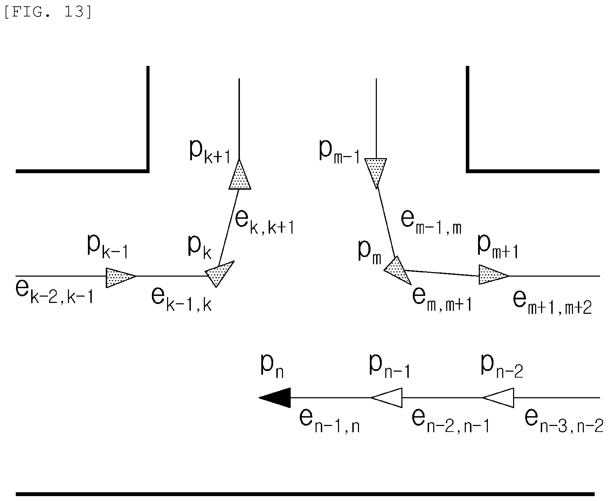

Hereinafter, an operation of a map generator of predicting a global map will be described. FIG. 12 is a flowchart illustrating an operation of a map generator of predicting a global map and FIGS. 13 to 17 are views illustrating data processed by the map generator.

When a second condition for a movement distance of the mobile robot or a change of the surrounding environment is satisfied, the global map predicting unit predicts a global map for a set of the updated key frames. The second condition is set based on the movement distance or the change of the surrounding environment. For example, the second condition is set such that the mobile robot travels a predetermined distance or deviates from a predetermined distance range, or a matching rate of the surrounding structure deviates from a predetermined range.

All the recent N scan information is filtered data and has data on a fixed structure. The global map predicting unit stores the filtered key frames.

In step S310, the global map predicting unit corrects an error of each key frame using uncertainty propagation with respect to a specified key frame. Variables related to key frames are transmitted to a combination of other variables in the functional relationship with uncertainty.

A first candidate group related to a key frame located within a predetermined distance is extracted using Mahalanobis distance. The Mahalanobis distance is a value indicating how many times the distance from the mean value is the standard deviation and represents which value is hard to generate or how strange it is by a numerical value. In FIG. 13, nodes $p_{k-1}$, $p_k$, $p_{k+1}$, $p_{m-1}$, $p_m$, $p_{m+1}$, of the first candidate group which are extracted with respect to a node $p_n$ related to a recently inserted key frame are illustrated.

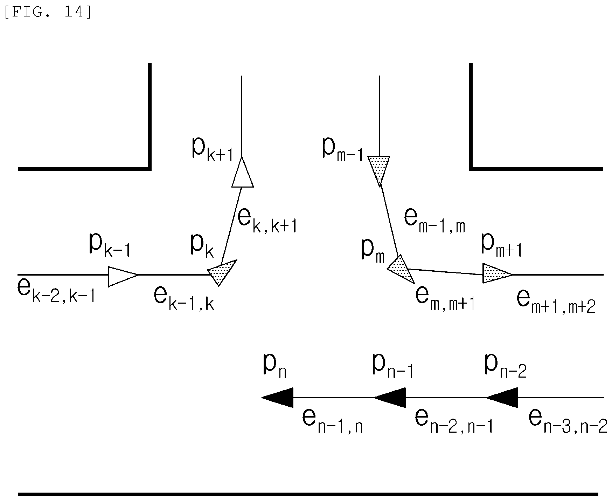

In step S320, the global map predicting unit compares a key frame of the first candidate group with a key frame obtained during a predetermined time period to extract a second candidate group related to a key frame matching in a predetermined probable range. In FIG. 14, nodes $p_k$, $p_{m-1}$, $p_m$, $p_{m+1}$ of the second candidate group which are extracted with respect to nodes $p_n$, $p_{n-1}$, $p_{n-2}$ related to recent N key frames are illustrated.

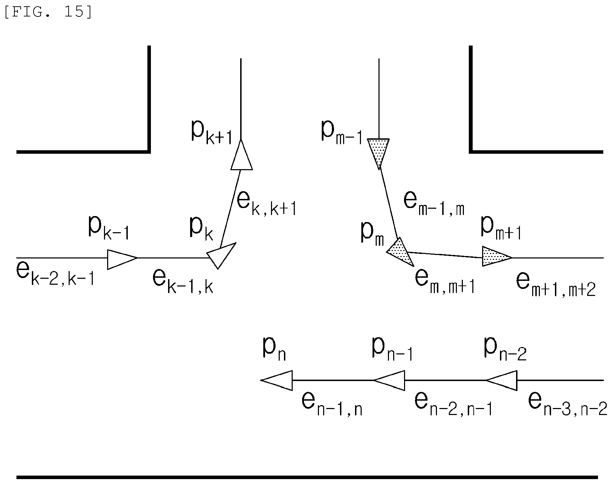

In step S330, the global map predicting unit extracts a third candidate group related to a key frame matching a predetermined consistence range from the second candidate group using a consistence checking algorithm. The global map predicting unit rechecks an erroneously matched candidate. For example, as the consistency checking algorithm, a maximum clique or single cluster graph partitioning technique may be applied. FIG. 15 illustrates extracted nodes $p_{m-1}$, $p_m$, $p_{m+1}$ of the third candidate group.

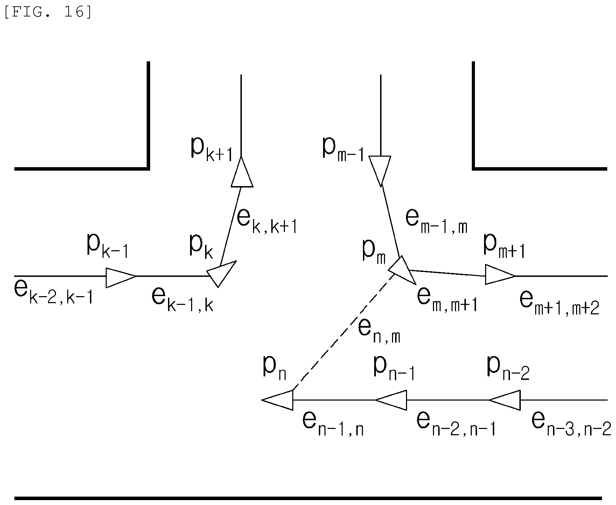

In step s340, the global map predicting unit detects a loop closure edge between inconsecutive nodes with respect to the key frame belonging to the third candidate group. The global map predicting unit forms a spatial relationship between the recent node and the significant node. FIG. 16 illustrates a loop closure edge $e_{n,\,m}$ between inconsecutive nodes $p_n$, $p_m$.

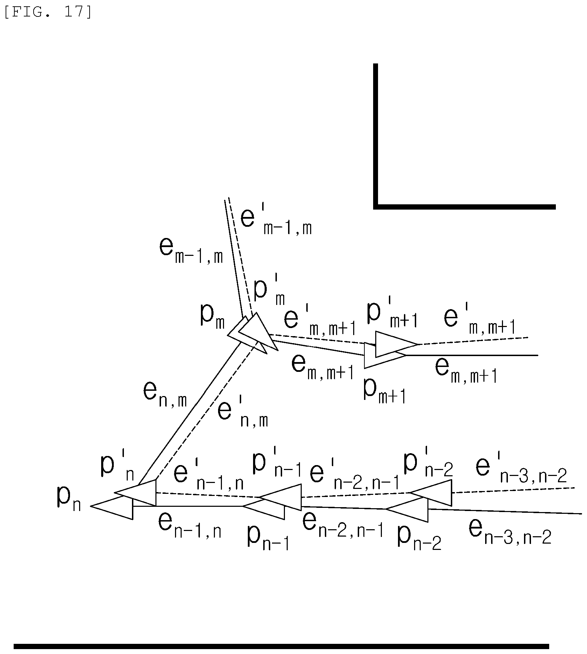

In step S350, the global map predicting unit corrects the error of the odometry edge and the error of the loop closure edge by a graph optimizing technique. The global map predicting unit finds a node value which satisfies constrains as much as possible or a node value which is minimally deviated from the constrains and optimizes a position of the node by performing a process of correcting errors in the positions of the nodes. That is, the nodes are converged to an optimal node value based on the constrain. For example, the error may be corrected by calculating a minimum value of a weighted sum of square for an error vector by the plurality of odometry edges and the plurality of loop closure edges. FIG. 17 illustrates nodes and edges for correcting an error.

The global map predicting unit may output a global map obtained by adding the plurality of local maps.

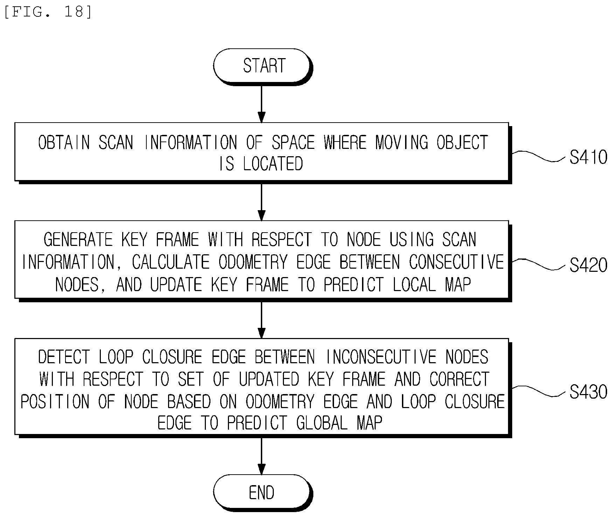

FIG. 18 is a flowchart illustrating a map creating method of a moving object according to another exemplary embodiment of the present disclosure. A map creating method of a moving object may be performed by a map generator of a moving object (a mobile robot).

In step S410, the map generator obtains scan information of a space where the mobile robot is located. In step S410 of obtaining scan information, omnidirectional distance information or distance information of partial regions may be obtained using a Lidar sensor. In step S410 of obtaining the scan information, odometry information of a mobile robot may be additionally obtained together with the distance information.

In step S420, the map generator generates a key frame for a node using scan information, calculates an odometry edge between consecutive nodes, and updates the key frame to predict a local map.

In step S420 of predicting a local map, the scan information rotates or moves to match the scan or measure the odometry information of the mobile robot to calculate the odometry edge. In step S420 of predicting a local map, an error between the predicted odometry edge and the predicted odometry edge is corrected based on the predicted value of the node by scan matching.

In step S420 of predicting a local map, when a first condition for a movement distance of the mobile robot is satisfied, the key frame is filtered. In step S420 of predicting a local map, a moving obstacle and a fixed obstacle are discriminated from a plurality of scan information obtained during a predetermined time period by a probable technique and newly obtained scan information is compared to remove the moving obstacle from the key frame, thereby updating the local map.

In step S430, the map generator detects a loop closure edge between inconsecutive nodes for a set of the updated key frames and corrects the position of the node based on the odometry edge and the loop closure edge to predict a global map.

In step S430 of predicting a global map, when a second condition for a movement distance of the mobile robot or a change of the surrounding environment is satisfied, a global map for a set of the updated key frames is predicted.

In step S430 of predicting a global map, an error of each key frame is corrected using uncertainty propagation with respect to a specified key frame and a first candidate group for a key frame located within a predetermined distance is extracted using Mahalanobis distance.

In step S430 of predicting a global map, a key frame of the first candidate group is compared with a key frame obtained during a predetermined time period to extract a second candidate group related to a key frame matching in a predetermined probable range.

In step S430 of predicting a global map, a third candidate group related to a key frame matching a predetermined consistence range is extracted from the second candidate group using a consistence checking algorithm. The map generator generates a loop closure edge for at least one node among nodes belonging to the first candidate group to the third candidate group.

In step S430 of predicting a global map, the error of the odometry edge and the error of the loop closure edge are corrected by a graph optimizing technique.

A plurality of components included in the hybrid sensor and the moving object are combined to each other to be implemented by at least one module. The components are connected to a communication path which connects a software module or a hardware module in the apparatus to organically operate between the components. The components communicate with each other using one or more communication buses or signal lines.

The hybrid sensor and the moving object may be implemented in a logic circuit by hardware, firm ware, software, or a combination thereof or may be implemented using a general purpose or special purpose computer. The apparatus may be implemented using hardwired device, field programmable gate ware (FPFA) or application specific integrated circuit (ASIC). Further, the apparatus may be implemented by a system on chip (SoC) including one or more processors and a controller.

The hybrid sensor and the moving object may be mounted in a computing device provided with a hardware element as a software, a hardware, or a combination thereof. The computing device may refer to various devices including all or some of a communication device for communicating with various devices and wired/wireless communication networks such as a communication modem, a memory which stores data for executing programs, and a microprocessor which executes programs to perform operations and commands.

The operation according to the exemplary embodiment of the present disclosure may be implemented as a program command which may be executed by various computers to be recorded in a computer readable medium. The computer readable medium indicates an arbitrary medium which participates to provide a command to a processor for execution. The computer readable medium may include solely a program command, a data file, and a data structure or a combination thereof. For example, the computer readable medium may include a magnetic medium, an optical recording medium, and a memory. The computer program may be distributed on a networked computer system so that the computer readable code may be stored and executed in a distributed manner. Functional programs, codes, and code segments for implementing the present embodiment may be easily inferred by programmers in the art to which this embodiment belongs.

## Claims

1. A hybrid sensor (10), comprising:

   a image sensor (110) which obtains image data for a target;
   a Lidar sensor (120) which obtains distance data for the target; and
   a processing unit (130) which generates composite data obtained by mapping the image data and the distance data,
   the image data includes first coordinate information which is two-dimensionally represented and intensity information related to the first coordinate information,
   the distance data includes second coordinate information which is two-dimensionally represented and depth information related to the second coordinate information,
   the composite data includes space coordinate information which is three-dimensionally represented and the intensity information,
   wherein the processing unit (130) compares the first coordinate information and the second coordinate information with respect to a space region where a first space area seen from a position where the image sensor is installed and a second space area seen from a position where the Lidar sensor is installed overlap to map corresponding coordinate information,
   wherein the processing unit (130) generates the composite data based on (i) depth information (d) corresponding to common coordinate information corresponding to the second coordinate information of the distance data, among the first coordinate information of the image data and (ii) intensity information corresponding to the common coordinate information,

wherein the processing unit (130) predicts first predicted depth information (p1) related to non-common coordinate information, using (i) depth information (d) corresponding to the common coordinate information of the composite data and (ii) intensity information corresponding to the common coordinate information, wherein the non-common coordinate information represents coordinate information which does not correspond to the second coordinate information of the distance data, among the first coordinate information of the image data,

wherein the processing unit (130) updates the composite data based on the first predicted depth information (p1) related to the non-common coordinate information,

wherein the processing unit (130) determines similarity between (i) intensity information of the non-common coordinate information and (ii) intensity information of common coordinate information present within a predetermined range to predict the first predicted depth information (p1), and

wherein the processing unit (130) predicts second predicted depth information (p2) related to the non-common coordinate information using (i) intensity information of the non-common coordinate information present within a predetermined range, (ii) intensity information of the common coordinate information present within a predetermined range, and (iii) the first predicted depth information (p 1) present within a predetermined range,

and the processing unit updates the composite data based on the second predicted depth information.

2. A moving object (1), comprising:

   a hybrid sensor (10) according to claim 1;
   a map generator (20) which analyzes the image data, the distance data, or the composite data to generate a map related to a surrounding environment; and
   a moving device (30) implemented to move the moving object (1) based on the map.

3. The moving object (1) according to claim 2, wherein the hybrid sensor (10) operates both the image sensor (110) and the Lidar sensor (120) for a first target to generate composite data and determines that the first target is closer than a predetermined distance using the distance data and
   the hybrid sensor (10) selectively operates the image sensor (110) or the Lidar sensor (120) for a second target to obtain data and determines that the second target is disposed farther than a predetermined distance using the distance data.

4. The moving object (1) according to claim 2, wherein the map generator (20) analyzes the image data, the distance data, or the composite data to generate a key frame related to a node, calculates an odometry edge between consecutive nodes, and updates the key frame to predict a local map and detects a loop closure edge between inconsecutive nodes with respect to a set of the updated key frame and corrects the position of the node based on the odometry edge and the loop closure edge to generate a global map.

5. The moving object (1) according to claim 4, wherein the map generator (20) rotates or moves the image data, the distance data, or the composite data to perform scan matching or measures the odometry information of the moving object (1) to calculate the odometry edge, corrects an error between the odometry edge predicted based on a predicted value of the node and the measured odometry edge through the scan matching, and filters the key frame when a predetermined condition for a movement distance of the moving object is satisfied.

6. The moving object (1) according to claim 4, wherein the map generator (20) predicts the global map for a set of the updated key frame when a predetermined condition for the movement distance of the mobile robot or a change of the surrounding environment is satisfied, corrects an error of the key frame using uncertainty propagation with respect to the specified key frame and extracts a first candidate for a key frame located within a predetermined distance using a Mahalanobis distance, compares a key frame of the first candidate group with a key frame obtained during a predetermined time period to extract a second candidate group related to a key frame matching in a predetermined probable range, extracts a third candidate group related to a key frame matching a predetermined consistence range from the second candidate group using a consistence checking algorithm, and corrects an error of the odometry edge and an error of the loop closure edge by a graph optimizing technique.

**Patentansprüche**

1. Hybridsensor (10), umfassend:

   einen Bildsensor (110), der Bilddaten für ein Ziel erhält;
   einen Lidar-Sensor (120), der Distanzdaten für das Ziel erhält; und
   eine Verarbeitungseinheit (130), die zusammengesetzte Daten erstellt, die erhalten werden, indem die Bilddaten und die Distanzdaten zugeordnet werden,

wobei die Bilddaten erste Koordinateninformationen, die zweidimensional dargestellt werden, und Intensitätsinformationen bezüglich der ersten Koordinateninformationen beinhalten,

wobei die Distanzdaten zweite Koordinateninformationen, die zweidimensional dargestellt werden, und Tiefeninformationen bezüglich der zweiten Koordinateninformationen beinhalten,

wobei die zusammengesetzten Daten Raumkoordinateninformationen, die dreidimensional dargestellt werden, und die Intensitätsinformationen beinhalten,

wobei die Verarbeitungseinheit (130) die ersten Koordinateninformationen und die zweiten Koordinateninformationen in Bezug auf einen Raumbereich vergleicht, wo eine erste Raumfläche, gesehen von einer ersten Position aus, wo der Bildsensor installiert ist, und eine zweite Raumfläche, gesehen von einer Position aus, wo der Lidar-Sensor installiert ist, überlappen, um entsprechende Koordinateninformationen zuzuordnen, wobei die Verarbeitungseinheit (130) die zusammengesetzten Daten basierend auf (i) Tiefeninformationen (d), die gemeinsamen Koordinateninformationen entsprechen, die den zweiten Koordinateninformationen der Distanzdaten entsprechen, unter den ersten Koordinateninformationen der Bilddaten und (ii) Intensitätsinformationen, die den gemeinsamen Koordinateninformationen entsprechen, erstellt,

wobei die Verarbeitungseinheit (130) erste vorhergesagte Tiefeninformationen (p1) bezüglich nichtgemeinsamer Koordinateninformationen unter Verwendung von (i) Tiefeninformationen (d), die den gemeinsamen Koordinateninformationen der zusammengesetzten Daten entsprechen und (ii) Intensitätsinformationen, die den gemeinsamen Koordinateninformationen entsprechen, vorhersagt, wobei die nicht-gemeinsamen Koordinateninformationen Koordinateninformationen unter den ersten Koordinateninformationen der Bilddaten darstellen, die nicht den zweiten Koordinateninformationen der Distanzdaten entsprechen,

wobei die Verarbeitungseinheit (130) die zusammengesetzten Daten basierend auf den ersten vorhergesagten Tiefeninformationen (p1) bezüglich der nicht-gemeinsamen Koordinateninformationen aktualisiert,

wobei die Verarbeitungseinheit (130) eine Ähnlichkeit zwischen (i) Intensitätsinformationen der nicht-gemeinsamen Koordinateninformationen und (ii) Intensitätsinformationen gemeinsamer Koordinateninformationen, die innerhalb einer vorgegebenen Spanne vorhanden sind, bestimmt, um die ersten vorhergesagten Tiefeninformationen (p1) vorherzusagen, und

wobei die Verarbeitungseinheit (130) zweite vorhergesagte Tiefeninformationen (p2) bezüglich der nicht-gemeinsamen Koordinateninformationen unter Verwendung von (i) Intensitätsinformationen der nicht-gemeinsamen Koordinateninformationen, die innerhalb einer vorgegebenen Spanne vorhanden sind, (ii) Intensitätsinformationen der gemeinsamen Koordinateninformationen, die innerhalb einer vorgegebenen Spanne vorhanden sind, und (iii) den ersten vorhergesagten Tiefeninformationen (p1), die innerhalb einer vorgegebenen Spanne vorhanden sind, vorhersagt, und die Vorhersageeinheit die zusammengesetzten Daten basierend auf den zweiten vorhergesagten Tiefeninformationen aktualisiert.

2. Bewegliches Objekt (1), umfassend:

   einen Hybridsensor (10) nach Anspruch 1; einen Kartenersteller (20), der die Bilddaten, die Distanzdaten oder die zusammengesetzten Daten analysiert, um eine Karte bezüglich einer umliegenden Umgebung zu erstellen; und eine Bewegungsvorrichtung (30), die dazu implementiert ist, das bewegliche Objekt (1) basierend auf der Karte zu bewegen.

3. Bewegliches Objekt (1) nach Anspruch 2, wobei der Hybridsensor (10) sowohl den Bildsensor (110) als auch den Lidar-Sensor (120) für ein erstes Ziel betreibt, um zusammengesetzte Daten zu erstellen, und unter Verwendung der Distanzdaten bestimmt, dass das erste Ziel näher als eine vorgegebene Distanz ist, und

der Hybridsensor (10) selektiv den Bildsensor (110) oder den Lidar-Sensor (120) für ein zweites Ziel betreibt, um Daten zu erhalten, und unter Verwendung der Distanzdaten bestimmt, dass das zweite Ziel weiter weg als eine vorgegebene Distanz angeordnet ist.

4. Bewegliches Objekt (1) nach Anspruch 2, wobei der Kartenersteller (20) die Bilddaten, die Distanzdaten oder die zusammengesetzten Daten analysiert, um ein Schlüsselbild bezüglich eines Knotens zu erstellen, einen Hodometrierand zwischen aneinandergrenzenden Knoten berechnet und das Schlüsselbild aktualisiert, um eine lokale Karte vorherzusagen, und einen Schleifenschlussrand zwischen nicht aneinandergrenzenden Knoten in Bezug auf einen Satz des aktualisierten Schlüsselbilds erfasst und die Position des Knotens basierend auf dem Hodometrierand und dem Schleifenschlussrand korrigiert, um eine globale Karte zu erstellen.

**5.** Bewegliches Objekt (1) nach Anspruch 4, wobei der Kartenersteller (20) die Bilddaten, die Distanzdaten oder die zusammengesetzten Daten rotiert oder bewegt, um einen Abtastungsabgleich durchzuführen, oder die Hodometrieinformationen des beweglichen Objekts (1) misst, um den Hodometrierand zu berechnen, einen Fehler zwischen dem basierend auf einem vorhergesagten Wert des Knotens vorhergesagten Hodometrierand und dem durch den Abtastungsabgleich gemessenen Hodometrierand korrigiert und das Schlüsselbild filtert, wenn eine vorgegebene Bedingung für eine Bewegungsdistanz des beweglichen Objekts erfüllt ist.

**6.** Bewegliches Objekt (1) nach Anspruch 4, wobei der Kartenersteller (20) die globale Karte für einen Satz der aktualisierten Schlüsselbilder vorhersagt, wenn eine vorgegebene Bedingung für die Bewegungsdistanz des mobilen Roboters oder eine Änderung der umliegenden Umgebung erfüllt ist, einen Fehler des Schlüsselbilds unter Verwendung von Unsicherheitspropagation in Bezug auf das spezifizierte Schlüsselbild korrigiert und einen ersten Kandidaten für ein Schlüsselbild, der sich innerhalb einer vorgegebenen Distanz befindet, unter Verwendung einer Mahalanobis-Distanz extrahiert, ein Schlüsselbild der ersten Kandidatengruppe mit einem Schlüsselbild vergleicht, das während einer vorgegebenen Zeitdauer erhalten wurde, um eine zweite Kandidatengruppe bezüglich eines Schlüsselbilds zu extrahieren, die in eine vorgegebene mögliche Spanne passt, eine dritte Kandidatengruppe bezüglich eines Schlüsselbilds, die zu einer vorgegebenen Konsistenzspanne passt, unter Verwendung eines Konsistenzprüfalgorithmus aus der zweiten Kandidatengruppe extrahiert und einen Fehler des Hodometrierands und einen Fehler des Schleifenschlussrands durch eine Graphenoptimierungstechnik korrigiert.

**Revendications**

**1.** Capteur hybride (10), comprenant :

un capteur d'image (110) qui obtient des données d'image pour une cible ;
un capteur Lidar (120) qui obtient des données de distance pour la cible ; et
une unité de traitement (130) qui génère des données composites obtenues par le mappage des données d'image et des données de distance,
les données d'image comprennent des premières informations de coordonnées qui sont représentées de manière bidimensionnelle et des informations d'intensité liées aux premières informations de coordonnées,
les données de distance comprennent des deuxièmes informations de coordonnées qui sont représentées de manière bidimensionnelle et des informations de profondeur liées aux deuxièmes informations de coordonnées,
les données composites comprennent des informations de coordonnées d'espace qui sont représentées de manière tridimensionnelle et les informations d'intensité,
dans lequel l'unité de traitement (130) compare les premières informations de coordonnées et les deuxièmes informations de coordonnées par rapport à une région d'espace dans laquelle une première zone vue depuis une position à laquelle le capteur d'image est installé et une deuxième zone d'espace vue depuis une position à laquelle le capteur Lidar est installé se chevauchent pour mapper des informations de coordonnées correspondantes,
dans lequel l'unité de traitement (130) génère les données composites sur la base (i) d'informations de profondeur (d) correspondant à des informations de coordonnées communes correspondant aux deuxièmes informations de coordonnées des données de distance, parmi les premières informations de coordonnées des données d'image et (ii) d'informations d'intensité correspondant aux informations de coordonnées communes,
dans lequel l'unité de traitement (130) prédit des premières informations de profondeur prédites (p1) liées à des informations de coordonnées non communes, à l'aide (i) d'informations de profondeur (d) correspondant aux informations de coordonnées communes des données composites et (ii) d'informations d'intensité correspondant aux informations de coordonnées communes, dans lequel les informations de coordonnées non communes représentent des informations de coordonnées qui ne correspondent pas aux deuxièmes informations de coordonnées des données de distance, parmi les premières informations de coordonnées des données d'image,
dans lequel l'unité de traitement (130) met à jour les données composites sur la base des premières informations de profondeur prédites (p1) liées aux informations de coordonnées non communes,
dans lequel l'unité de traitement (130) détermine une similarité entre (i) des informations d'intensité des informations de coordonnées non communes et (ii) des informations d'intensité d'informations de coordonnées communes présentes dans une plage prédéterminée pour prédire les premières informations de profondeur prédites (p1), et
dans lequel l'unité de traitement (130) prédit des deuxièmes informations de profondeur prédites (p2) liées aux informations de coordonnées non communes à l'aide (i) d'informations d'intensité des informations de coordonnées non communes présentes dans une plage prédéterminée, (ii) d'informations d'intensité des informations de coordonnées communes présentes dans une plage prédéterminée, et (iii) des premières informations de profondeur prédites (p1) présentes dans une plage prédéterminée, et l'unité de traitement met à jour les données composites sur la base des deuxièmes informations de profondeur prédites.

2. Objet en mouvement (1), comprenant :

un capteur hybride (10) selon la revendication 1 ;
un générateur de carte (20) qui analyse les données d'image, les données de distance ou les données composites pour générer une carte liée à un environnement environnant ; et
un dispositif de déplacement (30) mis en oeuvre pour déplacer l'objet en mouvement (1) sur la base de la carte.

3. Objet en mouvement (1) selon la revendication 2, dans lequel le capteur hybride (10) fait fonctionner à la fois le capteur d'image (110) et le capteur Lidar (120) pour une première cible pour générer des données composites et détermine que la première cible est plus proche qu'une distance prédéterminée à l'aide des données de distance, et
le capteur hybride (10) fait fonctionner sélectivement le capteur d'image (110) ou le capteur Lidar (120) pour une deuxième cible pour obtenir des données et détermine que la deuxième cible est disposée plus loin qu'une distance prédéterminée à l'aide des données de distance.

4. Objet en mouvement (1) selon la revendication 2, dans lequel le générateur de carte (20) analyse les données d'image, les données de distance ou les données composites pour générer une trame clé liée à un noeud, calcul un bord d'odométrie entre des noeuds consécutifs, et met à jour la trame clé pour prédire une carte locale et détecte un bord de fermeture de boucle entre des noeuds non consécutifs par rapport à un ensemble de la trame clé mise à jour et corrige la position du noeud sur la base du bord d'odométrie et du bord de fermeture de boucle pour générer une carte globale.

5. Objet en mouvement (1) selon la revendication 4, dans lequel le générateur de carte (20) fait tourner ou déplace les données d'image, les données de distance ou les données composites pour réaliser un appariement par balayage ou mesure les informations d'odométrie de l'objet en mouvement (1) pour calculer le bord d'odométrie, corrige une erreur entre le bord d'odométrie prédit sur la base d'une valeur prédite du noeud et le bord d'odométrie mesuré par l'appariement par balayage, et filtre la trame clé lorsqu'une condition prédéterminée pour une distance de déplacement de l'objet en mouvement est satisfaite.

6. Objet en mouvement (1) selon la revendication 4, dans lequel le générateur de carte (20) prédit la carte globale pour un ensemble de la trame clé mise à jour lorsqu'une condition prédéterminée pour la distance de déplacement du robot mobile ou un changement de l'environnement environnant est satisfaite, corrige une erreur de la trame clé à l'aide d'une propagation d'incertitude par rapport à la trame clé spécifiée et extrait un premier candidat pour une trame clé située à une distance prédéterminée à l'aide d'une distance de Mahalanobis, compare une trame clé du premier groupe de candidats à une trame clé obtenue au cours d'une période de temps prédéterminée pour extraire un deuxième groupe de candidats lié à une trame clé qui correspond dans une plage probable prédéterminée, extrait un troisième groupe de candidats lié à une trame clé qui correspond dans une plage de cohérence prédéterminée à partir du deuxième groupe de candidats à l'aide d'un algorithme de contrôle de cohérence, et corrige une erreur du bord d'odométrie et une erreur du bord de fermeture de boucle par une technique d'optimisation de graphe.

[FIG. 1]

```
┌─────────────────────────────────────┐
│          MOVING OBJECT               │
│             (1)                      │
│   ┌───────────────────────────────┐  │
│   │        HYBRID SENSOR          │  │
│   │           (10)                │  │
│   └───────────────────────────────┘  │
│   ┌───────────────────────────────┐  │
│   │        MAP GENERATOR          │  │
│   │           (20)                │  │
│   └───────────────────────────────┘  │
│   ┌───────────────────────────────┐  │
│   │        MOVING DEVICE          │  │
│   │           (30)                │  │
│   └───────────────────────────────┘  │
└─────────────────────────────────────┘
```

[FIG. 2]

```
┌─────────────────────────────────────┐
│          HYBRID SENSOR               │
│             (10)                     │
│   ┌───────────────────────────────┐  │
│   │        FIRST SENSOR           │  │
│   │           (110)               │  │
│   └───────────────────────────────┘  │
│   ┌───────────────────────────────┐  │
│   │        SECOND SENSOR          │  │
│   │           (120)               │  │
│   └───────────────────────────────┘  │
│   ┌───────────────────────────────┐  │
│   │       PROCESSING UNIT         │  │
│   │           (130)               │  │
│   └───────────────────────────────┘  │
└─────────────────────────────────────┘
```

[FIG. 3]

[FIG. 4]

camera

lidar

[FIG. 5]

First predicted depth information

Second predicted depth information

Mapped depth information

Intensity information

[FIG. 6A]

601

[FIG. 6B]

602

[FIG. 6C]

603

[FIG. 6D]

604

[FIG. 7]

[FIG. 8]

EP 3 447 532 B1

[FIG. 9]

[FIG. 10]

$p'_{k+1}$ $p_{k+1}$

$e'_{k,k+1}$ $e_{k,k+1}$

$p_{k-1}$ $e'_{k-1,k}$ $p'_k$

$e_{k-2,k-1}$ $p_{k-1}$ $e_{k-1,k}$ $p_k$

[FIG. 11]

$p_{k+1}$

$e_{k,k+1}$

$p_{k-1}$

$e_{k-2,k+1}$

$e_{k-1,k}$

$p_k$

moving
obstacle

[FIG. 12]

```
                            ┌─────────────┐
                            │    START    │
                            └──────┬──────┘
                                   │
                                   ▼
┌──────────────────────────────────────────────────────────┐
│  CORRECT ERROR OF EACH KEY FRAME USING UNCERTAINTY        │
│  PROPAGATION WITH RESPECT TO SPECIFIED KEY FRAME AND EXTRACT│ ─── S310
│  FIRST COORDINATE GROUP WITH RESPECT TO KEY FRAME LOCATED IN│
│  PREDETERMINED DISTANCE USING MAHALANOBIS DISTANCE         │
└──────────────────────────────────────────────────────────┘
                                   │
                                   ▼
┌──────────────────────────────────────────────────────────┐
│  COMPARE KEY FRAME OF FIRST COORDINATE GROUP AND KEY      │
│  FRAME OBTAINED DURING PREDETERMINED TIME PERIOD TO EXTRACT│ ─── S320
│  SECOND CANDIDATE GROUP WITH RESPECT TO KEY FRAME MATCHING │
│  PREDETERMINED PROBABLE RANGE                              │
└──────────────────────────────────────────────────────────┘
                                   │
                                   ▼
┌──────────────────────────────────────────────────────────┐
│  EXTRACT THIRD CANDIDATE GROUP WITH RESPECT TO KEY        │
│  FRAME MATCHING PREDETERMINED CONSISTENCE RANGE FROM SECOND│ ─── S330
│  CANDIDATE GROUP USING CONSISTENCE CHECKING ALGORITHM     │
└──────────────────────────────────────────────────────────┘
                                   │
                                   ▼
┌──────────────────────────────────────────────────────────┐
│  DETECT LOOP CLOSURE EDGE BETWEEN NON-CONSECUTIVE NODES   │ ─── S340
└──────────────────────────────────────────────────────────┘
                                   │
                                   ▼
┌──────────────────────────────────────────────────────────┐
│  CORRECT ERROR OF ODOMETRY EDGE AND ERROR OF LOOP         │ ─── S350
│  CLOSURE EDGE BY GRAPH OPTIMIZING TECHNIQUE               │
└──────────────────────────────────────────────────────────┘
                                   │
                                   ▼
                            ┌─────────────┐
                            │     END     │
                            └─────────────┘
```

[FIG. 13]

[FIG. 14]

[FIG. 15]

[FIG. 16]

[FIG. 17]

[FIG. 18]

```
                        ╭─────────╮
                        │  START  │
                        ╰────┬────╯
                             │
                             ▼
   ┌───────────────────────────────────────────────────┐
   │  OBTAIN SCAN INFORMATION OF SPACE WHERE MOVING OBJECT │───── S410
   │                   IS LOCATED                        │
   └───────────────────────────────────────────────────┘
                             │
                             ▼
   ┌───────────────────────────────────────────────────┐
   │  GENERATE KEY FRAME WITH RESPECT TO NODE USING SCAN │
   │  INFORMATION, CALCULATE ODOMETRY EDGE BETWEEN CONSECUTIVE │───── S420
   │  NODES, AND UPDATE KEY FRAME TO PREDICT LOCAL MAP   │
   └───────────────────────────────────────────────────┘
                             │
                             ▼
   ┌───────────────────────────────────────────────────┐
   │  DETECT LOOP CLOSURE EDGE BETWEEN INCONSECUTIVE NODES │
   │  WITH RESPECT TO SET OF UPDATED KEY FRAME AND CORRECT │───── S430
   │  POSITION OF NODE BASED ON ODOMETRY EDGE AND LOOP CLOSURE │
   │           EDGE TO PREDICT GLOBAL MAP                │
   └───────────────────────────────────────────────────┘
                             │
                             ▼
                        ╭─────────╮
                        │   END   │
                        ╰─────────╯
```

## REFERENCES CITED IN THE DESCRIPTION

**Patent documents cited in the description**

- US 2016073080 A1
- EP 2890125 A1
- US 2011285910 A1
- US 2016104289 A1
- US 2014300732 A1
- WO 2017122529 A1
- US 2018130885 A1

**Non-patent literature cited in the description**

- **FENG LI.** *A hybrid camera for motion deblurring and depth map super-resolution*